# EUROPÄISCHE PATENTANMELDUNG

(11) **EP 3 319 337 A1**
(43) Veröffentlichungstag der Anmeldung: **09.05.2018**
(21) Anmeldenummer: 17186218.8
(22) Anmeldetag: 14.08.2017
(51) Int. Cl.: H04R 25/00, G10H 1/40

(54) **VERFAHREN ZUR TAKTERKENNUNG MITTELS EINES HÖRGERÄTES**

(30) Priorität: 03.11.2016 DE 102016221578
(71) Anmelder: Sivantos Pte. Ltd., Singapore 539775 (SG)
(72) Erfinder: MÜLLER-WEHLAU, Matthias, 90411 Nürnberg (DE); GIESE, Ulrich, 90765 Fürth (DE)
(74) Vertreter: FDST Patentanwälte

(57) **Zusammenfassung**

Die Erfindung betrifft ein Verfahren, wobei ein akustisches Eingangssignal in einem Eingangswandler (14) in ein elektrisches Eingangssignal umgewandelt wird, wobei das elektrische Eingangssignal in einer Signalverarbeitungseinheit (16) in ein elektrisches Ausgangssignal verarbeitet wird, wobei das elektrische Ausgangssignal in einem Ausgangswandler (18, 20) in ein Ausgabesignal umgewandelt wird, wobei durch eine Analyse des elektrischen Eingangssignals ein Takt erkannt wird, und wobei der erkannte Takt einem Hörsystemnutzer wahrnehmbar ausgegeben wird. Des Weiteren betrifft die Erfindung ein entsprechendes Hörsystem (10), mittels welchem im Eingangssignal ein Takt erkannt und wahrnehmbar ausgegeben wird.

## Beschreibung

Ein Hörgerät dient der Versorgung einer hörgeschädigten Person mit akustischen Umgebungssignalen, die zu einer Kompensation der jeweiligen Hörschädigung entsprechend verarbeitet und insbesondere verstärkt werden. Ein Hörgerät umfasst hierzu üblicherweise einen Eingangswandler, beispielsweise in Form eines Mikrofons, eine Signalverarbeitungseinheit mit einem Verstärker, sowie einen Ausgangswandler. Der Ausgangswandler ist in der Regel als ein Miniaturlautsprecher realisiert und wird auch als Hörer oder Receiver bezeichnet. Er erzeugt insbesondere akustische Ausgabesignale, die zum Gehör des Patienten geleitet werden und bei diesem die gewünschte Hörwahrnehmung erzeugen.

Um den zahlreichen individuellen Bedürfnissen entgegenzukommen, werden unterschiedliche Bauformen von Hörgeräten angeboten. Bei den sogenannten ITE-Hörgeräten (In-the-Ear, auch IDO bzw. In-dem-Ohr) wird ein Gehäuse, welches sämtliche funktionale Komponenten einschließlich des Mikrofons und des Receivers enthält, zumindest teilweise im Gehörgang getragen. CIC-Hörgeräte (Completely-in-Canal) sind den ITE-Hörgeräten ähnlich, werden jedoch vollständig im Gehörgang getragen. Bei BTE-Hörgeräten (Behind-The-Ear, auch Hinter-dem-Ohr bzw. HdO) wird ein Gehäuse mit Komponenten wie einer Batterie und der Signalverarbeitungseinheit hinter dem Ohr getragen. Je nach Ausgestaltung kann der Receiver entweder direkt im Gehörgang des Trägers (sogenannte Ex-Hörer-Hörgeräte oder Receiver-in-the-Canal (RIC)-Hörgeräte). Alternativ ist der Receiver innerhalb des Gehäuses selbst angeordnet und ein flexibler, auch als Tube bezeichneter Schallschlauch leitet die akustischen Ausgabesignale des Receivers vom Gehäuse zum Gehörgang (Schlauch-Hörgeräte).

Um - unabhängig vom Hörgerätetyp - die gewünschte Hörwahrnehmung zu erreichen, müssen die zur sprachlichen Verständigung erforderlichen Schallsignale für die hörgeschädigte Person wahrnehmbar und unterscheidbar gemacht und idealerweise einem natürlichen Klangempfinden angenähert werden. Hierzu werden beispielsweise Hörgeräte mit Kompression und Störgeräuschunterdrückung eingesetzt, wodurch die Sprachverständlichkeit optimiert, die Lautheitswahrnehmung normalisiert, Störgeräusche unterdrückt und auch der Komfort bzw. die Hörwahrnehmung sehr lauter bzw. sehr leiser Eingangssignale verbessert wird.

Trotz der vorbeschriebenen Algorithmen ist eine störungsfreie bzw. eine ungestörte Hörwahrnehmung für einen Hörgeräteträger jedoch nicht in jeder Situation umsetzbar. Beispielsweise können für einen ein Hörgerät tragenden Musiker oder Tänzer Probleme bei der Erkennung des Taktes der gespielten Musik auftreten. Dies ist darauf zurückzuführen, dass durch die zur Signalverarbeitung von akustischen Eingangssignalen genutzten, sehr schnell arbeitenden Algorithmen, insbesondere eine Rauschunterdrückung oder eine Dynamikkompression, die die Taktinformationen tragenden Signalanteile verdeckt bzw. verschleiert werden und für den Hörgeräteträger ein Takt als solcher nicht mehr oder nur erschwert wahrnehmbar ist. Falsche Einsätze oder ein Musizieren bzw. Tanzen "außer Takt" können die Folge sein.

Aus der DE 10 2007 043 081 A1 sind ein Verfahren und eine Anordnung zur Erfassung des Typs externer Schallquellen mit einem Hörgerät bekannt. Im Rahmen des Verfahrens wird von einer externen Schallquelle mindestens ein Kennungssignal abgegeben. Das Kennungssignal wird vom Hörgerät erfasst und für eine Erkennung des Typs der Schallquelle im Hörgerät ausgewertet. Gemäß der DE 10 2007 043 081 A1 kann der Typ der Schallquelle aus der Pulsfrequenz und der Pulsbreite des Kennungssignals erkannt werden.

Die US 2016/0292270 A1 offenbart ein Verfahren, mittels welchem anhand einer akustischen Analyse Musikstücke hinsichtlich ihres Tempos (beats per minutes) analysiert werden. Das Tempo des jeweiligen Musikstückes wird mit der aktuellen Herzfrequenz eines Nutzers verglichen bzw. korreliert und bei Abweichungen zwischen dem Tempo des Musikstückes und der Herzfrequenz ein zu der Herzfrequenz des Nutzers passendes Musikstück ausgewählt.

Aus der US 8,213,640 B2 ist ein Verfahren bekannt, bei dem einem ein Hörgerät tragenden Musiker ein Musikgerät Töne oder Signale vorgibt, bei dem Schall aus der Umgebung erfasst und mit der Vorgabe verglichen wird, und bei dem das entsprechende Vergleichsergebnis ausgegeben wird. Das Verfahren eignet sich insbesondere zum Stimmen von Musikinstrumenten. In einer Variante ist das Musikgerät ein Metronom, welches einen Takt vorgibt.

Der Erfindung liegt als eine erste Aufgabe zugrunde, ein Verfahren anzugeben, welches einem Hörsystemnutzer eine verbesserte Wahrnehmung eines Taktes ermöglicht.

Als eine zweite Aufgabe liegt der Erfindung zugrunde, ein Hörsystem anzugeben, mittels welchem eine entsprechend verbesserte Wahrnehmung eines Taktes umgesetzt werden kann.

Die erste Aufgabe der Erfindung wird erfindungsgemäß gelöst durch ein Verfahren zur Takterkennung für ein Hörsystem, wobei ein akustisches Eingangssignal in einem Eingangswandler in ein elektrisches Eingangssignal umgewandelt wird, wobei das elektrische Eingangssignal in einer Signalverarbeitungseinheit in ein elektrisches Ausgangssignal verarbeitet wird, wobei das elektrische Ausgangssignal in einem Ausgangswandler in ein Ausgabesignal umgewandelt wird, wobei durch eine Analyse des elektrischen Eingangssignals ein Takt erkannt wird, und wobei der erkannte Takt einem Hörsystemträger wahrnehmbar ausgegeben wird.

Der Takt wird durch eine entsprechende Analyse des elektrischen Eingangssignals erkannt und derart verarbeitet, dass er wahrnehmbar ausgegeben werden kann. Auf diese Weise wird sichergestellt, dass die Taktinformationen bei der sich anschließenden Signalverarbeitung nicht verloren gehen bzw. verschleiert werden. Die Analyse eines akustischen Signals auf einen Takt ist grundsätzlich bekannt und nicht Gegenstand der vorliegenden Erfindung. Beispielsweise wird der Takt eines akustischen Signals in vielen elektronischen Wiedergabegeräten erkannt und visuell ausgegeben. Die Takterkennung beinhaltet hierbei beispielsweise statistische Verfahren und beobachtet den zeitlichen Verlauf der Schallenergie und/oder sie wertet beispielsweise die zeitliche Korrelation der Schallenergie in charakteristischen Frequenzbändern aus.

Um zu gewährleisten, dass der Takt im Rahmen der Analyse des elektrischen Eingangssignals sicher erkannt wird, wird dieses bevorzugt unverarbeitet analysiert. Insbesondere wird das akustische Eingangssignal unkomprimiert analysiert. In einer anderen Alternative wird das Eingangssignal vorverarbeitet, um es beispielsweise auf ein Nutzsignal zu reduzieren, wobei anschließend das Nutzsignal auf einen darin enthaltenen Takt analysiert wird.

Das Hörsystem ist insbesondere ein Hörgerät, wobei bevorzugt die darin enthaltene Signalverarbeitungseinheit zur Analyse des elektrischen Eingangssignals herangezogen wird. Die Erfindung ist aber nicht eingeschränkt auf ein Hörgerät. Vielmehr ist die Erfindung in jedem Gerät verwirklichbar, welches Kapazität zur Signalverarbeitung von akustischen Signalen aufweist. Ein Hörsystem in diesem Sinne ist beispielsweise ein Smartphone, ein Fernsehgerät, eine Computer, insbesondere ein Tablet-PC, ein Kopfhörersystem, z.B. mit Rauschunterdrückung usw. In einer weiteren Alternative wird die Umwandlung des akustischen Eingangssignals in ein elektrisches Eingangssignal und/oder die Analyse des elektrischen Eingangssignals in einem externen Gerät, z.B. in einem Smartphone oder in einem Tablet-PC, durchgeführt, wobei die wahrnehmbar, insbesondere die hörbare Ausgabe des erkannten Taktes oder Taktsignals über ein Hörgerät erfolgt. Sowohl die Einspielung des elektrischen Eingangssignals als auch eines erkannten Taktes oder Taktsignals in das Hörsystem oder in das Hörgerät können drahtgebunden, drahtlos über Funk oder direkt erfolgen. Insofern kann der Eingangswandler ein Mikrofon, eine Empfangsantenne oder ein Anschluss- oder Ausgangsport eines externen Audiogeräts sein.

In einer vorteilhaften Ausgestaltung der Erfindung wird der Takt akustisch wahrnehmbar mittels des Hörsystems selbst ausgegeben. Hierzu werden vorzugsweise erkannte Taktanteile im Ausgabesignal verstärkt ausgegeben. Die Verstärkung der erkannten Taktanteile erfolgt insbesondere bevorzugt in der Signalverarbeitungseinheit im Rahmen der übrigen Algorithmen zur Verarbeitung des Eingangssignals in das Ausgangssignal. Durch die Ausgabe der verstärkten Taktanteile in dem Ausgabesignal wird es dem Hörsystemnutzer ermöglicht, den Takt im insbesondere akustischen Ausgangssignal unmittelbar und leicht zu erfassen.

Unter einem Takt wird vorliegend grundsätzlich eine Abfolge von sich periodisch wiederholenden Schlägen verstanden, die in der Musik mit einer Gruppierung von bestimmten Notenwerten innerhalb eines bestimmten Zeitraums zusammenfallen. Insofern betrifft der Takt der Erfindung den Takt eines Musikstücks genauso wie ein sich periodisch wiederholendes beliebiges akustisches Signal, z.B. den Herzschlag eines Menschen oder eine Taktvorgabe durch ein Metronom. Für einen spezifischen Takt liegt insbesondere eine unterschiedliche Betonung der einzelnen Schläge vor

In einer bevorzugten Variante wird als Takt im Eingangssignal ein Herzschlag erkannt und der erkannte Herzschlag wahrnehmbar ausgegeben wird. In einer bevorzugten Variante wird der erkannte Herzschlag als ein Taktanteil im Ausgabesignal verstärkt ausgegeben wird. Ein Arzt oder eine Pflegekraft mit Hörschädigung, der bzw. die den Herzschlag eines Patienten z.B. mit einem Stethoskop kontrollieren möchte, kann so den Herzschlag des Patienten in dem über das Hörsystem ausgegebenen Ausgabesignal deutlich wahrnehmen und beispielsweise Unregelmäßigkeiten im Herzrhythmus erkennen. Alternativ kann der Herzschlag auch visualisiert werden, beispielsweise auf einem mitgeführten Smartphone oder auf einem anderen entsprechenden Ausgabegerät. In einer anderen, ebenso bevorzugten Variante wird z.B. ein über ein medizinisches Überwachungsgerät akustisch wiedergegebene Herzschlag vom Hörsystem erfasst und für den Hörsystem-Nutzer entsprechend verarbeitet bzw. aufbereitet und ausgegeben. Eine weitere Anwendung liegt im sportlichen Bereich. Hierbei kann im Rahmen der Erfindung zum Beispiel der eigene Herzschlag vorzugsweise akustisch wiedergegeben werden. Die Erfassung des Taktes erfolgt in einer zweckmäßigen Ausgestaltung anhand eines akustischen Eingangssignals. Alternativ bevorzugt wird der Takt durch gängige Verfahren der Pulsmessung zur Verfügung gestellt. Hierbei liegt der Nutzen für den Anwender in der akustischen Überwachung der eigenen Kreislauffunktion.

In einer weiter vorteilhaften Ausgestaltung der Erfindung wird ein zum erkannten Takt synchrones Taktsignal ausgegeben. Das synchrone Taktsignal wird insbesondere mittels des erkannten Taktes synthetisch erzeugt oder aus diesem abgeleitet. Die Art der Ausgabe kann hierbei an verschiedene, den jeweiligen Gegebenheiten entsprechenden Situationen angepasst werden. So ist eine visuelle Ausgabe genauso bevorzugt wie eine akustische Ausgabe. Weiter bevorzugt erfolgt die wahrnehmbare Ausgabe für den Hörgeräteträger haptisch, oder über ein Vibrationssignal.

In einer weiter bevorzugten Variante wird das zum Takt synchrone Taktsignal mittels eines mobilen Kommunikationsmittels ausgegeben. Das verstärkte Taktsignal wird beispielsweise über ein Smartphone oder einen Tablet-PC akustisch als wahrnehmbares Signal geeigneter Intensität, Form und/oder Frequenz ausgegeben oder dem Hörgeräteträger auf dem Display des jeweiligen Kommunikationsmittels visualisiert.

In einer anderen, ebenfalls bevorzugten Variante wird das zum Takt synchrone Taktsignal als ein Sprachsignal ausgegeben. Die Sprachausgabe des Taktsignals erfolgt beispielsweise durch eine Stimmausgabe im Ohr des Hörsystem-Nutzers. Im Falle eines Musikers kann der Takt der Musik dem Hörgeräteträger beispielsweise durch das Einzählen eines Taktes (z.B. 4/4 Takt: "eins, zwei, drei, vier, eins, zwei, drei, vier.....") wahrnehmbar ausgegeben werden. Bei einer Pflegekraft, die den Herzschlag kontrolliert, können dieser die Herzschläge pro Minute beispielsweise akustisch ausgegebenen werden.

Von Vorteil ist es weiter, wenn zur Ausgabe des zum Takt synchronen Taktsignals ein taktiler Taktgeber eingesetzt wird. Ein Taktgeber gibt Impulse in einer bestimmten Frequenz ab. So kann beispielsweise ein Musiker einen solchen Taktgeber an seinem Körper bei sich führen, der den Takt durch Vibrationen für den Hörsystem-Nutzer fühlbar angibt.

Vorteilhafterweise werden Abweichungen des im Rahmen der Analyse des Eingangssignals erkannten Takts von einem vorgegebenen Takt automatisch erkannt. Weicht beispielsweise ein in einem Orchester musizierender, ein Hörgerät tragender Musiker in der Spielweise seines Musikinstruments vom Takt des Orchesters ab, so wird diese Abweichung automatisch erkannt. Der Musiker wird zweckmäßigerweise hierüber informiert und kann sein Spiel entsprechend an den vorgegeben Takt anpassen. Im Hinblick auf den Herzschlag eines Patienten wird die Abweichung des gemessenen Herzschlages von einem vorgegebenen, gleichmäßigen Herzschlag erkannt. So können beispielsweise Herzrhythmusstörungen erkannt und entsprechende Maßnahmen zur Behandlung eingeleitet werden.

Das Erkennen verschiedener Takte ist bevorzugt dadurch gewährleistet, dass das Eingangssignal einer Frequenzzerlegung bzw. Frequenzfilterung unterzogen wird. Dadurch werden in unterschiedlichen Frequenzbereichen auftretende Takte unterschieden und individualisiert. Jeder individuell erkannte Takt wird zweckmäßigerweise individuell und wahrnehmbar ausgegeben, wie dies vorliegend generell beschrieben ist.

Die zweite Aufgabe der Erfindung wird erfindungsgemäß gelöst durch ein Hörsystem, umfassend einen Eingangswandler zur Umwandlung eines akustisches Eingangssignals in ein elektrisches Eingangssignal, eine mit dem Eingangswandler verbundene Signalverarbeitungseinheit zur Verarbeitung des elektrischen Eingangssignals, einen mit der Signalverarbeitungseinheit verbundenen Ausgangswandler zur Umwandlung des verarbeiteten elektrischen Ausgangssignals in ein Ausgabesignal, sowie eine Taktanalyseeinheit, die zur Erkennung eines Taktes im elektrischen Eingangssignal und zu einer wahrnehmbaren Ausgabe des erkannten Taktes an einen Hörsystemnutzer eingerichtet und ausgebildet ist.

Die für das Verfahren zur Takterkennung und des vorteilhafte Weiterbildungen beschriebenen Vorteile können hierbei sinngemäß auf das Hörsystem übertragen werden.

In einer bevorzugten Weiterbildung des Hörsystems ist die Taktanalyseeinheit in die Signalverarbeitungseinheit implementiert. Die Analyse wird in einer alternativen Variante in einer externen Vorrichtung, insbesondere in einem Smartphone, in einem Tablet-PC oder in einem sonstigen Gerät durchgeführt, welches Kapazität zur Verarbeitung eines akustischen Eingangssignals oder eines hieraus abgeleiteten elektrischen Eingangssignals hat.

Unter einem Hörsystem wird vorliegend sowohl ein Hörgerät als solches, als auch ein Kopfhörer, ein Headset oder ein Lautsprecher verstanden. Ein Hörsystem in diesem Sinne ist beispielsweise ein Smartphone, ein Fernsehgerät, eine Computer, insbesondere ein Tablet-PC, ein Kopfhörersystem, z.B. mit Rauschunterdrückung usw. In einer weiteren Alternative wird die Umwandlung des akustischen Eingangssignals in ein elektrisches Eingangssignal und/oder die Analyse des elektrischen Eingangssignals in einem externen Gerät, z.B. in einem Smartphone oder in einem Tablet-PC, durchgeführt, wobei die wahrnehmbar, insbesondere die hörbare Ausgabe des erkannten Taktes oder Taktsignals über ein Hörgerät erfolgt. Sowohl die Einspielung des elektrischen Eingangssignals als auch eines erkannten Taktes oder Taktsignals in das Hörsystem oder in das Hörgerät können drahtgebunden, drahtlos über Funk oder direkt erfolgen. Insofern kann der Eingangswandler ein Mikrofon, eine Empfangsantenne oder ein Anschluss- oder Ausgangsport eines externen Audiogeräts sein.

Zweckmäßigerweise ist die Signalverarbeitungseinheit derart eingerichtet und ausgebildet, dass Taktanteile im Ausgabesignal verstärkt ausgebbar sind. Durch die Ausgabe der verstärkten Taktanteile in dem Ausgabesignal wird dieses als ein gemeinsames Audio-Signal ausgegeben. Der Hörgeräteträger vernimmt damit in seinem hörbaren Audio-Signal die verstärkten Taktanteile wahrnehmbar.

Vorzugsweise ist die Taktanalyseeinheit zur Ausgabe eines zum Takt synchronen Taktsignals eingerichtet und ausgebildet ist. Die Ausgabe erfolgt vorzugsweise mittels eines mobilen Kommunikationsmittels wie eines Smartphones, einen Computers oder eines Tablet-PCs. Möglich sind hierbei beispielsweise eine visuelle Ausgabe über einen Bildschirm oder eine Sprachausgabe über einen Lautsprecher Zweckmäßigerweise wird das zum Takt synchrone Taktsignal mittels einer Funk-Verbindung von der Taktanalyseeinheit an das externe Gerät übermittelt.

Alternativ bevorzugt ist zur Ausgabe des zum Takt synchronen Taktsignals ein taktiler Taktgeber eingesetzt. Als Taktgeber dient beispielsweise ein am Körper tragbares Vibrationselement, welches den erkannten Takt für einen Hörgeräteträger wahrnehmbar ausgibt.

Weitere vorteilhafte Ausgestaltungen für das Hörsystem ergeben sich aus den auf das Verfahren gerichteten Unteransprüchen.

Im Folgenden werden Ausführungsbeispiele der Erfindung anhand einer Zeichnung näher erläutert. Dabei zeigen:
- Fig. 1: einen schematischen Verfahrensablauf zur Takterkennung für ein Hörgerät, sowie
- Fig. 2: ein Hörgerät mit einer Signalverarbeitungseinheit zur Erkennung eines Taktes und zu dessen wahrnehmbarer Ausgabe

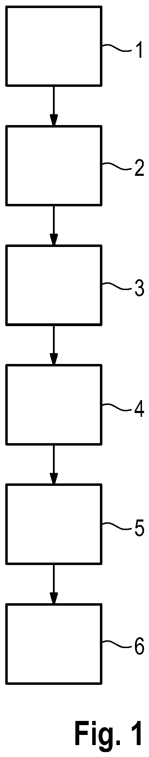

In Fig. 1 ist der Verfahrensablauf zur Takterkennung für ein Hörgerät schematisch dargestellt. Um den Takt in einem akustischen Eingangssignal zu erkennen und beispielsweise zu verstärken, wird das aus einem akustischen Eingangssignal beispielsweise mittels eines Mikrofons umgewandelte elektrische Eingangssignals kontinuierlich analysiert (Schritt 1). Im Rahmen der Analyse wird, basierend auf Taktmerkmalen, wie beispielsweise periodisch wiederkehrende Schallspitzen ("Beats"), ein Takt erkannt (Schritt 2). Insbesondere werden hierbei im Signal enthaltene Taktanteile bzw. Taktmerkmale erkannt.

Das elektrische Eingangssignal wird typischerweise in einer Signalverarbeitungseinheit verarbeitet und für den Hörgeräteträger frequenzspezifisch und entsprechend erkannter Hörsituationen aufbereitet (Schritt 3). Insbesondere erfolgt im Rahmen dieser Signalverarbeitung (Schritt 3) beispielsweise eine Frequenzkompression des Signals, eine Störgeräuschunterdrückung und/oder eine Rückkopplungskompensation. Die Analyse des Taktes erfolgt vor dieser Signalverarbeitung.

Die im elektrischen Eingangssignal erkannten Taktanteile bzw. Taktmerkmale werden vorliegend beispielsweise im Rahmen der Signalverarbeitung verstärkt bzw. nach Durchführung der vorgenannten Verarbeitungsalgorithmen dem verarbeiteten Signal wieder hinzugefügt (Schritt 4). Schließlich wird das so erhaltene elektrische Ausgangssignal in ein akustisches Ausgabesignal umgewandelt (Schritt 5). Die Taktanteile bzw. Taktmerkmale des akustischen Eingangssignals sind im Ausgabesignal erhalten bzw. für den Hörgeräteträger wahrnehmbar verstärkt wiedergegeben (Schritt 6).

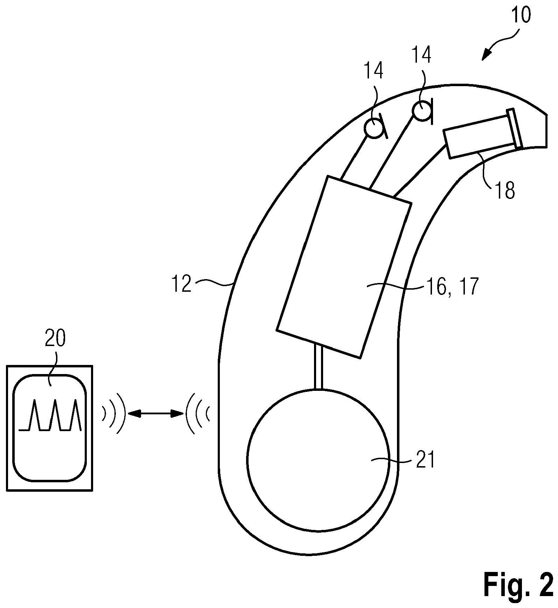

In Fig. 2 ist als Hörgerät 10 ein Hinter-dem-Ohr-Hörgerät (HdO-Hörgerät) gezeigt. Das Hörgerät 10 umfasst ein Hörgerätegehäuse 12, in welchem als Eingangswandler 14 zwei Mikrofone 14 angeordnet sind. Mittels der Mikrofone 14 wird der Schall aus der Umgebung als akustisches Eingangssignal aufgenommen und in ein elektrisches Eingangssignal umgewandelt. Zur Takterkennung wird das unverarbeitete elektrische Eingangssignal kontinuierlich analysiert.

Das elektrische Eingangssignal wird innerhalb der Signalverarbeitungseinheit 16 verarbeitet bzw. verstärkt. Ebenso wird die Signalverarbeitungseinheit 16 als eine Taktanalyseeinheit 17 herangezogen, die im noch unverarbeiteten Signal einen Takt bzw. Taktanteile identifiziert. Das verarbeitete Ausgangssignal wird dann in einem Ausgangswandler 18, z.B. einen Lautsprecher, in ein akustisches Ausgabesignal umgewandelt. In einer Variante sind dem Ausgangssignal die erkannten Taktanteile verstärkt aufgeschaltet. In einer anderen Variante wird der erkannte Takt dem Hörgeräteträger über den Ausgangswandler 18 als ein Sprachsignal ausgegeben. In einer weiteren Variante wird der erkannte Takt beispielsweise per Funk auf ein externes Ausgabegerät 20, z.B. ein Smartphone, geleitet, welches den Takt visuell oder taktil (z.B. per Vibration) ausgibt.

Die Energieversorgung des Hörgeräts 10 und insbesondere der Signalverarbeitungseinheit 18 erfolgt durch eine ebenfalls in das Hörgerätegehäuse 12 integrierte Batterie 21.

### Bezugszeichenliste

- 1: erster Verfahrensschritt
- 2: zweiter Verfahrensschritt
- 3: dritter Verfahrensschritt
- 4: vierter Verfahrensschritt
- 5: fünfter Verfahrensschritt
- 6: sechster Verfahrensschritt
- 10: Hörsystem
- 12: Hörgerätegehäuse
- 14: Eingangswandler
- 16: Signalverarbeitungseinheit
- 17: Taktanalyseeinheit
- 18: Ausgangswandler
- 20: Externes Gerät
- 21: Batterie

## Patentansprüche

1. Verfahren zur Takterkennung für ein Hörsystem (10),
- wobei ein akustisches Eingangssignal in einem Eingangswandler (14) in ein elektrisches Eingangssignal umgewandelt wird,
- wobei das elektrische Eingangssignal in einer Signalverarbeitungseinheit (16) in ein elektrisches Ausgangssignal verarbeitet wird,
- wobei das elektrische Ausgangssignal in einem Ausgangswandler (18) in ein Ausgabesignal umgewandelt wird,
- wobei durch eine Analyse des elektrischen Eingangssignals ein Takt erkannt wird, und
- wobei der erkannte Takt einem Hörsystemnutzer wahrnehmbar ausgegeben wird.

2. Verfahren nach Anspruch 1, wobei das elektrische Eingangssignal unverarbeitet analysiert wird.

3. Verfahren nach Anspruch 1 oder 2, wobei erkannte Taktanteile im Ausgabesignal verstärkt ausgegeben werden.

4. Verfahren nach einem der vorhergehenden Ansprüche, wobei als Takt ein Herzschlag erkannt wird und wobei der erkannte Herzschlag wahrnehmbar, insbesondere als ein verstärkter Taktanteil im Ausgabesignal, ausgegeben wird.

5. Verfahren nach einem der vorhergehenden Ansprüche, wobei ein zum erkannten Takt synchrones Taktsignal ausgegeben wird.

6. Verfahren nach Anspruch 5, wobei das zum erkannten Takt synchrone Taktsignal mittels eines mobilen Kommunikationsmittels ausgegeben wird.

7. Verfahren nach Anspruch 5 oder 6, wobei das zum erkannten Takt synchrone Taktsignal als ein Sprachsignal ausgegeben wird.

8. Verfahren nach einem der Ansprüche 5 bis 7, wobei das zum erkannten Takt synchrone Taktsignal mittels eines taktilen Taktgebers ausgegeben wird.

9. Verfahren nach einem der vorhergehenden Ansprüche, wobei Abweichungen des erkannten Takts von einem vorgegebenen Takt automatisch erkannt werden.

10. Hörsystem (10), umfassend einen Eingangswandler (14) zur Umwandlung eines akustisches Eingangssignals in ein elektrisches Eingangssignal, eine mit dem Eingangswandler (14) verbundene Signalverarbeitungseinheit (16) zur Verarbeitung des elektrischen Eingangssignals, einen mit der Signalverarbeitungseinheit (16) verbundenen Ausgangswandler (18) zur Umwandlung des verarbeiteten elektrischen Ausgangssignals in ein Ausgabesignal, sowie eine Taktanalyseeinheit (17), die zur Erkennung eines Taktes im elektrischen Eingangssignal und zu einer wahrnehmbaren Ausgabe des erkannten Taktes an einen Hörsystemnutzer eingerichtet und ausgebildet ist.

11. Hörsystem (10) nach Anspruch 10,
wobei die Taktanalyseeinheit (17) in die Signalverarbeitungseinheit (16) implementiert ist.

12. Hörsystem (10) nach Anspruch 10 oder 11, wobei die Taktanalyseeinheit (17) derart eingerichtet und ausgebildet ist, dass erkannte Taktanteile im Ausgabesignal verstärkt ausgebbar sind.

13. Hörsystem (10) nach einem der Ansprüche 10 bis 12, wobei die Taktanalyseeinheit (17) zur Ausgabe eines zum erkannten Takt synchronen Taktsignals eingerichtet und ausgebildet ist.

14. Hörsystem (10) nach einem der Ansprüche 10 bis 13, wobei zur Ausgabe des zum erkannten Takt synchronen Taktsignals ein taktiler Taktgeber eingesetzt ist.
